# EUROPEAN PATENT SPECIFICATION

(11) **EP 4 242 072 B1**
(45) Date of publication and mention of the grant of the patent: **27.11.2024**
(21) Application number: 23159109.0
(22) Date of filing: 28.02.2023
(51) Int. Cl.: B60T 1/06, F16D 51/20, F16D 65/00, F16D 65/09

(54) **BRAKE FOR TRAILER AXLES OF AGRICULTURAL TYPE AND METHOD FOR MAKING A BRAKE**
BREMSE FÜR ACHSEN VON ANHÄNGERN LANDWIRTSCHAFTLICHER ART UND VERFAHREN ZUR HERSTELLUNG EINER BREMSE
FREIN POUR ESSIEUX DE REMORQUE DE TYPE AGRICOLE ET PROCÉDÉ DE FABRICATION D'UN FREIN

(30) Priority: 07.03.2022 IT 202200004295; 25.05.2022 IT 202200010847
(43) Date of publication of application: 13.09.2023
(73) Proprietor: A.D.R. S.p.A., 20151 Milano (IT)
(72) Inventor: RADRIZZANI, Flavio, 21040 Uboldo (Varese) (IT)
(74) Representative: Rapisardi, Mariacristina

(56) References cited:
- US-A- 4 445 597
- US-A- 4 526 254

## Description

The present invention relates to a brake for trailer axles of agricultural type.

It is known that the axles for trailers of agricultural type traditionally have drum brakes for reasons of economy and simplicity in which the pair of shoes provided with friction material is articulated on a single common fulcrum point.

As is known, the machining and the assemblies of the various components of the axle and the brake may have even significantly different tolerances.

The mechanical machining and coupling of the ends of the axles with the roller bearings and the wheel hub, like the coupling of the brake drum with the wheel drum can have tolerances of the order of a hundredth of a millimetre, within which the longitudinal axis of the axle coincides with the axis of the wheel hub and of the brake drum.

The so-called "brake mass", consisting of the whole of the pair of shoes pivoted on a single pin fixed to a "brake plate", is coupled differently with the axle, for reasons of constructional simplicity and economy, with a process for welding the brake plate to the axle: the greater tolerances and the different thermal shrinkages of the components can result in coupling between the brake plate, and thus brake mass, and the axle in which the respective axes are misaligned also by an order of magnitude by a few millimetres.

It is also known that this misalignment accordingly involves an eccentricity of the shoes and of the respective friction materials with respect to the inner surface of the drum on which the braking action develops: this eccentricity causes a limitation of the braking power, differing wear to the friction materials, braking vibrations, and even breakage of the friction materials with locking of the brake or elimination of braking, with devastating consequences for the safety of operators and of the trailer.

A need is thus felt to improve the structure of a brake for trailer axles of agricultural type of known type.

### Brakes of known type are described in US 4 445 597 A and US 4 526 254 A,

The technical task which is proposed for the present invention is, therefore, to create a brake for trailer axles of agricultural type which makes it possible to eliminate the technical drawbacks complained of in the prior art.

Within the context of this technical task an object of the invention is to create a brake for trailer axles of agricultural type that ensures a coincidence between the technical axis, i.e. the ideal axis of the braking shoes and the longitudinal axis of the axle, of the wheel hub and of the brake drum.

Another object of the invention is to create a brake for trailer axles of agricultural type that maintains the ideal axis of the braking shoes coinciding with the longitudinal axis of the axle, of the wheel hub and of the brake drum fixed over time.

Another object of the invention is to create a brake for trailer axles of agricultural type that maintains the ideal axis of the braking shoes coinciding with the longitudinal axis of the axle, of the wheel hub and of the brake drum with simple means that is easy to activate and is cheap fixed over time.

The technical task, together with these and other objects according to the present invention are achieved by creating a brake for trailer axles of agricultural type comprising at least one axle, a wheel hub, a brake drum and a brake mass rigidly connected to said axle and comprising at least one brake plate, at least two shoes equipped with friction material and an articulating pin of said two shoes that has a head and a stem, said stem of said pin being removably housed axially in a hole provided on said brake plate, and a tightening nut for tightening said pin in said hole being further provided, characterised in that said stem of said pin is housed with radial clearance in said hole and in that locking means is provided with a distance set between the axis of said pin and the axis of said hole, said locking means comprising at least two reciprocally engaged conjugate surfaces, at least one of which has a rippled finish.

According to the invention, the surface with a rippled engagement finish is in the form of a radial or diamond-shaped rippling.

According to the invention, said at least one engagement surface can coincide with the surface of the circular crown defined by the outer diameter of said head and by the outer diameter of said stem of said pin.

According to an embodiment of the invention, said brake comprises a bush fixed to said plate, in which said bush surrounds said hole and has an axial cavity having cylindrical generatrices arranged on the prolongation of the cylindrical generatrices of said hole, in which said at least two conjugate surfaces comprise a surface of said head of said pin engaged with a conjugate surface of said bush, at least one of said engagement surface of said pin and said conjugate surface of said bush having said rippled finish.

According to another embodiment of the invention, each shoe has a first and a second shoe rib that are opposed and positioned symmetrically on opposite sides of said plate and engage respective rotation guides supported by said pin.

In one embodiment of the invention, said first shoe rib engages a first rotation guide present on said head of said pin and said second rib engages a second rotation guide present on a ring supported by said pin.

According to this further embodiment of the invention, said at least two conjugate surfaces comprise a first pair of surfaces of reciprocal engagement between said head of said pin and a first side of said hole and a second pair of surfaces of reciprocal engagement between said ring and a second side of said hole opposite said first side, at least one of the surfaces of said first pair and at least one of the surfaces of said second couple having a rippled finish.

The invention also discloses a method for making the brake for trailer axles of agricultural type, comprising the steps of:
- coupling the pin with the hole without locking the pin with the nut;
- activating the brake, so that the shoes are free to perform a radial movement equal to the movement of the axis of the pin with respect to the axis of the hole;
- making the shoes with the friction material adhere respectively to the surface of the inner wall of the drum;
   self-centring the braking shoes, making a braking activation axis coincide with a longitudinal axis of the brake drum, of the wheel hub and of the axle, in this movement the shoes dragging said pin to a new thus defined position of the axis of the pin with respect to the axis of the hole; and
- locking rigidly and firmly in the new position the pin with respect to the hole by means of the engagement of the nut, engaging the conjugate surfaces reciprocally.

Further characteristics and advantages of the invention will more fully emerge from the description of a preferred but not exclusive embodiment of the brake for trailer axles of agricultural type according to the invention, illustrated by way of non-limiting example in the accompanying drawings, in which:
figure 1 shows an exploded axonometric assembly view of half of an axle with brake, according to a first embodiment of the brake;
figure 2 shows a perspective view of a preassembled pair of shoes with a pin and springs with reference to the brake of figure 1;
figure 3 shows a perspective view of a preassembled pair of shoes with a pin and springs opposite a brake plate, with reference to the brake of figure 1;
figures 4a and 4b shows a front view and a section of a brake plate, with reference to the brake of figure 1;
figures 5a and 5b show front and side views of a pin according to a first embodiment, with reference to the brake of figure 1;
figure 6 shows an axonometric view of a pin according to a second embodiment, with reference to the brake of figure 1;
figures 7a and 7b show front and side views partially in section of a pin according to another embodiment, with reference to the brake of figure 1;
figure 8 shows a section of an assembly detail of the brake unit in a first assembly position, with reference to the brake of figure 1;
figure 9 shows a section of an assembly detail of the brake unit in a second possible position subsequent to an initial braking, with reference to the brake of figure 1;
figure 10 shows an exploded axonometric assembly view of half of an axle with brake, according to a further embodiment of the brake;
figure 11 shows a perspective view of a preassembled pair of shoes with a pin and springs with reference to the brake of figure 10;
figure 12 shows a perspective view of a preassembled pair of shoes with a pin and springs with reference to the brake of figure 10;
figure 13 shows a perspective view of a pair of shoes that is not yet pivoted on the plate, with reference to the brake of figure 10;
figure 14 shows a section of an assembly detail of the brake unit in a first assembly position, with reference to the brake of figure 10; and
figure 15 shows a section of an assembly detail of the brake unit in a second possible position subsequent to an initial braking, with reference to the brake of figure 10.

The following detailed description refers to the appended drawings, which form a part thereof. In the drawings, similar reference numbers typically identify similar components, unless the context indicates otherwise.

The embodiments described in the detailed description and in the drawings are not intended to be limiting.

The aspects of the present description, as generally described in the present context and illustrated in the figures, may be arranged, replaced, combined and designed in a wide range of different configurations, which are all contemplated explicitly and are part of this description.

With reference to the cited figures, a brake for trailer axles of agricultural type is denoted in its entirety by reference number 1.

The brake for trailer axles of agricultural type 1 comprises at least one axle 10 fixed to the trailer with fixing means not indicated in figures and connected axially to the end 11 thereof with rotational fixing means, typically rolling bearings, to the wheel hub 20.

The brake drum 30 is fixed rigidly to the wheel hub 20, the brake drum 30 being dragged by the wheel hub 20 in the rolling of the wheel on the terrain rotating around the longitudinal axis Y of the axle 10.

The brake mass 40 comprises at least one brake plate 41 and at least one pair of shoes 50 A and 50 B, which are substantially opposite and symmetrical with respect to an axis that is perpendicular to the axis Y.

The brake mass 40 is solidly constrained to the fixed axle 10 through the rigid connection of the brake plate 41 with the axle 10, typically by welding along the edges of a seat 42.

The shoes 50 A and 50 B are equipped with friction material respectively 51 A and 51 B; the two shoes 50 A and 50 B are elastically connected together by springs 55 A and 55 B.

The spring 55 A retains and engages symmetrically the two ends 52 A and 52 B against a braking activation cam 60.

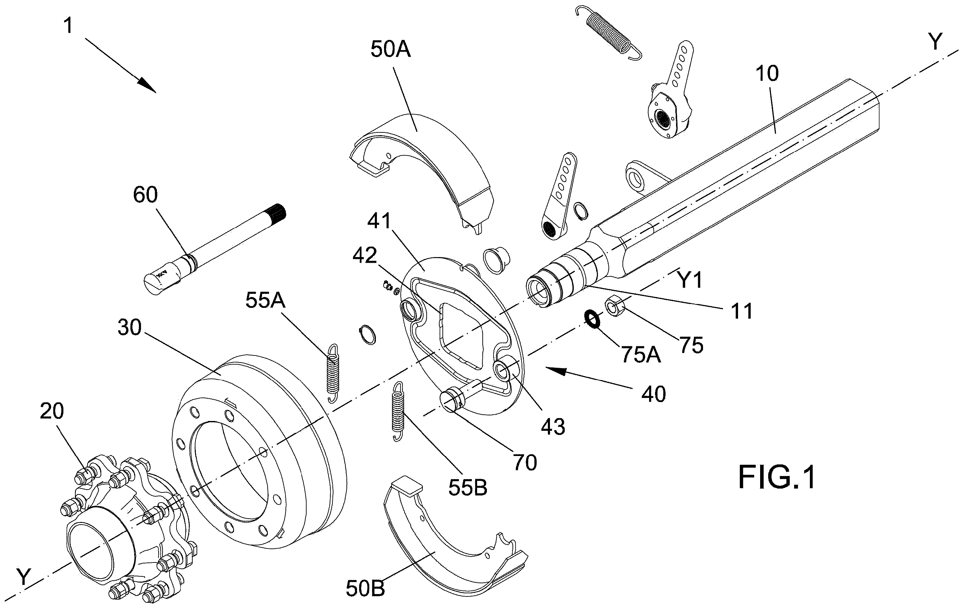

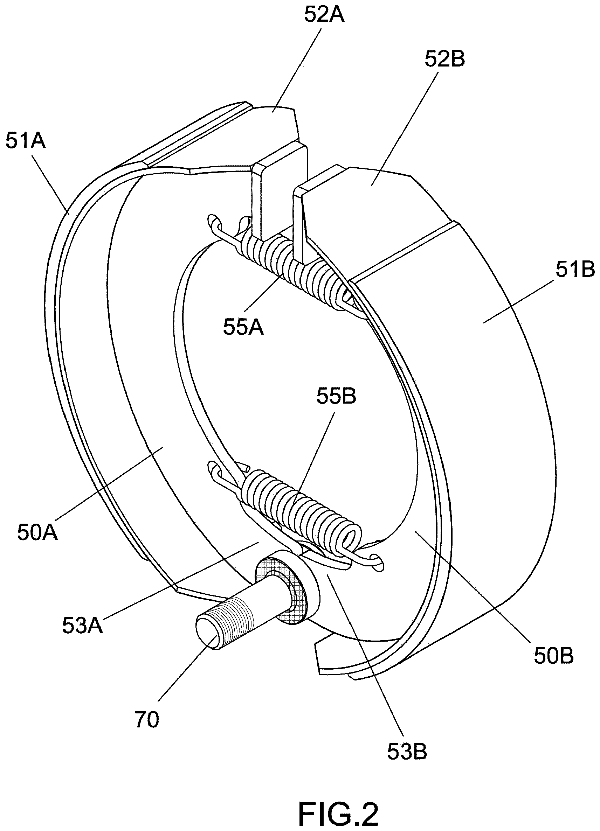

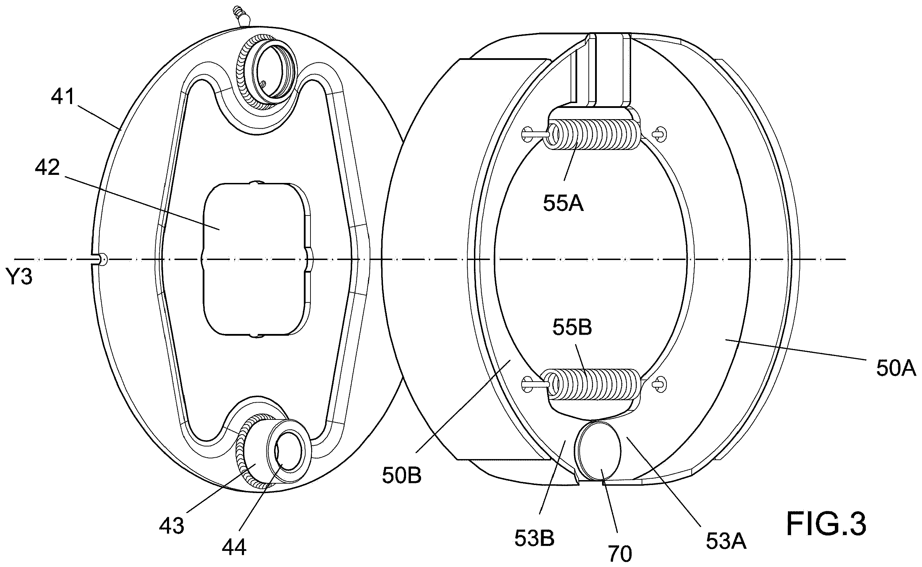

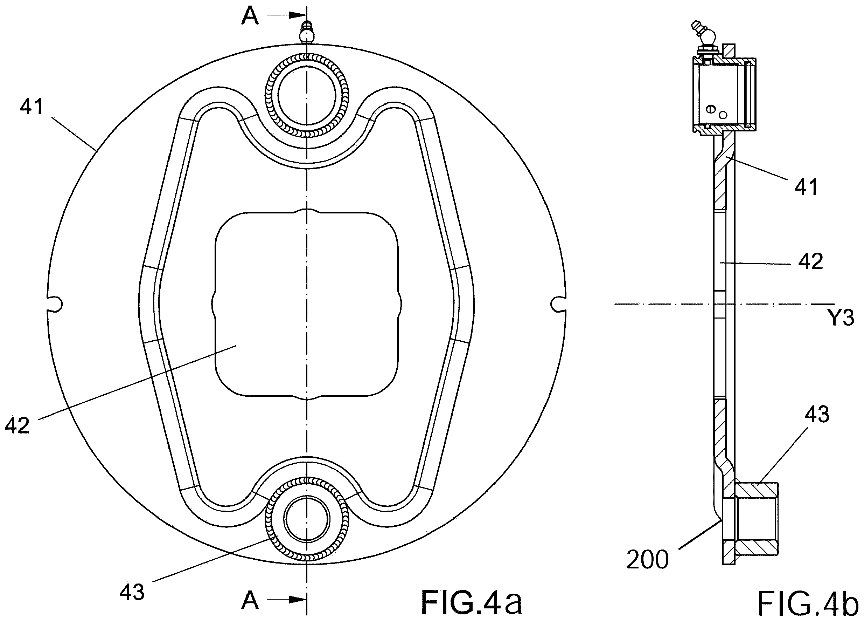

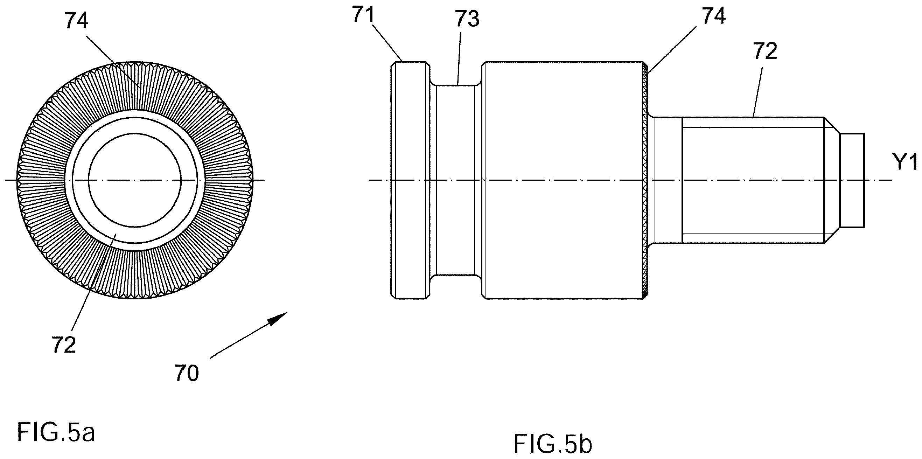

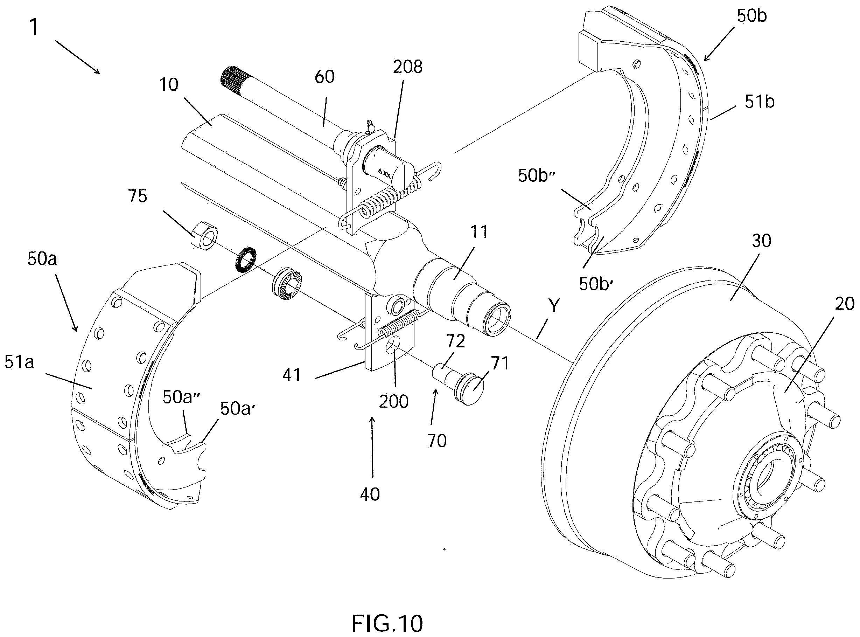

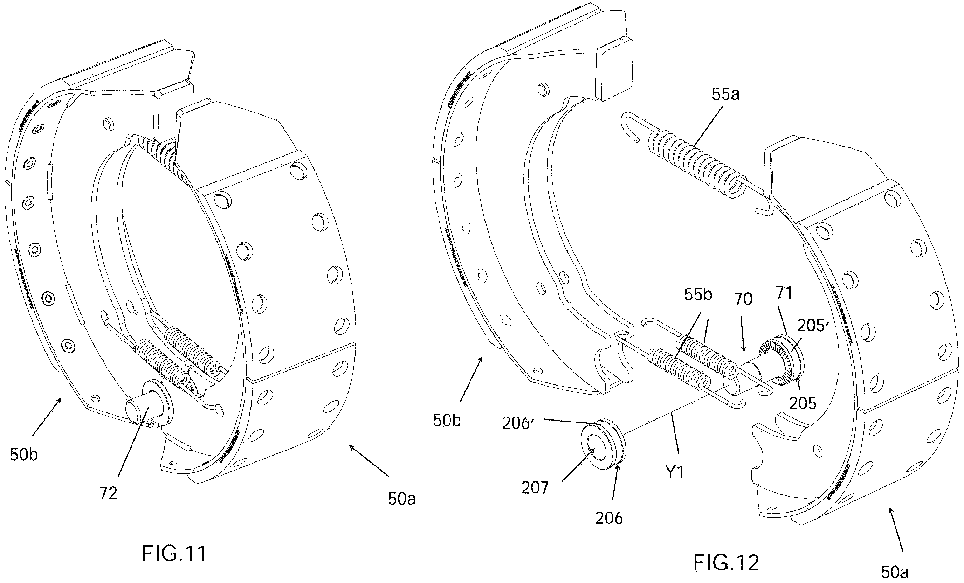

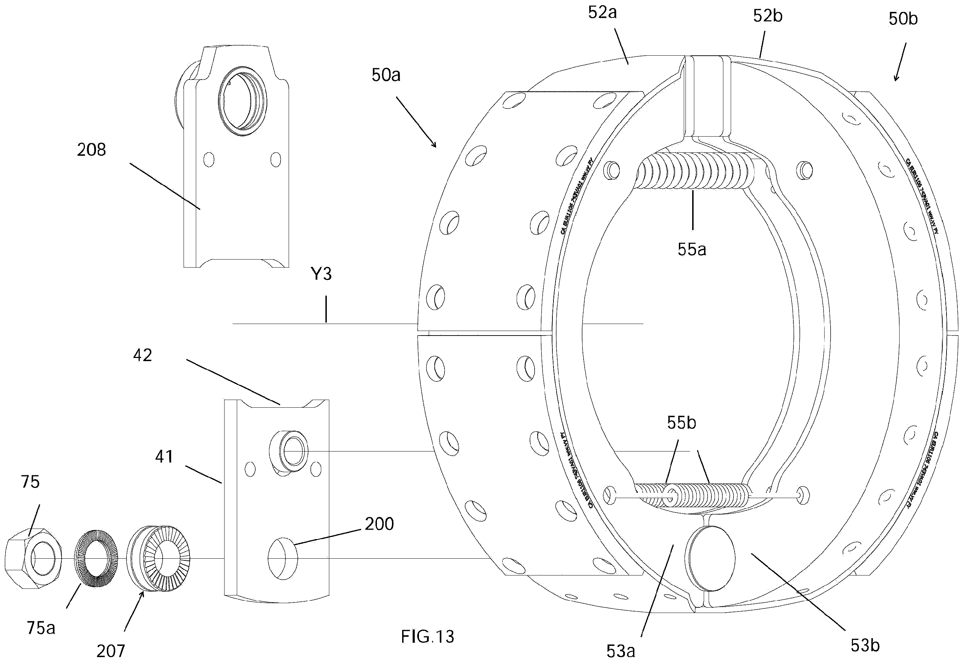

The springs 55 B (a single spring in the first embodiment illustrated in figures 1-9, two springs in the second embodiment illustrated in figures 10-15) retain and engage symmetrically the two ends 53 A and 53 B that rotate freely around a rotation fulcrum coinciding with an axis Y1 substantially parallel to the axis Y and coinciding with the axis of a pin 70 removably housed in an axial direction in a hole 200 of the brake plate 41.

The articulating pin 70 of the two shoes 50 A, 50B having a head 71 and a stem 72 that is removably housed axially in the hole 200 of the brake plate 41.

The pin 70 has a head 71 of a greater diameter and a stem 72 of a lesser diameter than that of the head 71.

The pin 70 is fixed to the hole 200 by a suitable tightening nut 75.

Advantageously, the stem 72 of the pin 70 is housed with radial clearance in the hole 200 and locking means is provided with a distance set between the axis Y1 of the pin 70 and the axis Y2 of the hole 200.

The radial clearance of the stem 72 of the pin 70 housed in the hole 200 is equal to the difference in diameter DB of the hole 200 and the outer diameter DS of the stem 72.

Advantageously, the locking means comprises at least two reciprocally engaged conjugate surfaces 44, 74, 201, 202, 203, 204 at least one of which has a rippled finish.

The surface 44, 74, 201, 202, 203, 204 preferably has a rippled finish in the form of a radial or diamond-shaped rippling.

At least one of these conjugate surfaces coincides with the surface of the circular crown defined by the outer diameter of the head 71 and by the outer diameter of the stem 72 of the pin 70.

Reference is now made to the embodiment illustrated in figures 1 - 9.

The brake comprises a bush 43 fixed to the plate 41.

The bush 43 surrounds the hole 200 and has an axial cavity having cylindrical generatrices arranged on the prolongation of the cylindrical generatrices of the hole 200.

In this case, a pair of conjugate surfaces is provided that engage reciprocally and comprise a surface 74 of the head 71 of the pin 70 and a surface 44 of the bush 43.

Typically, the pin 70 and the bush 43 are made of steel.

The stem 72 has a length that is greater than that of the bush 43 and the end opposite the suitably threaded head 71 on which the nut 75 acts.

Suitably, the head 71 has a seat 73 in which the freely rotating conjugate surfaces of the two ends 53 A and 53 B of the shoes 50 A and 50 B are housed.

The head 71 of the pin 70 thus acts as an articulation fulcrum of the shoes 50 A and 50 B.

The stem 72 has the outer diameter DS significantly less than the diameter DB of the bush 43, which in turn has a longitudinal axis coaxial with the axis Y2 of the hole 200.

The stem 72 is then housed in the bush 43 with radial clearance, because of the difference of DB with DS, and the axis Y1 of the pin 70 can but does not necessarily coincide with the axis Y2 of the bush 43.

In this case, as said, the engagement surface 74, coinciding with the surface of the circular crown defined by the outer diameter of the head 71 and by the outer diameter of the stem 72, engages during the locking step against the conjugate engagement surface 44 of the bush 43; further, as said, at least one of the engagement surface 74 of the pin 70 and the conjugate engagement surface 44 of the bush 43 has a rippled finish, for example, as shown, only the engagement surface 74 of the pin 70.

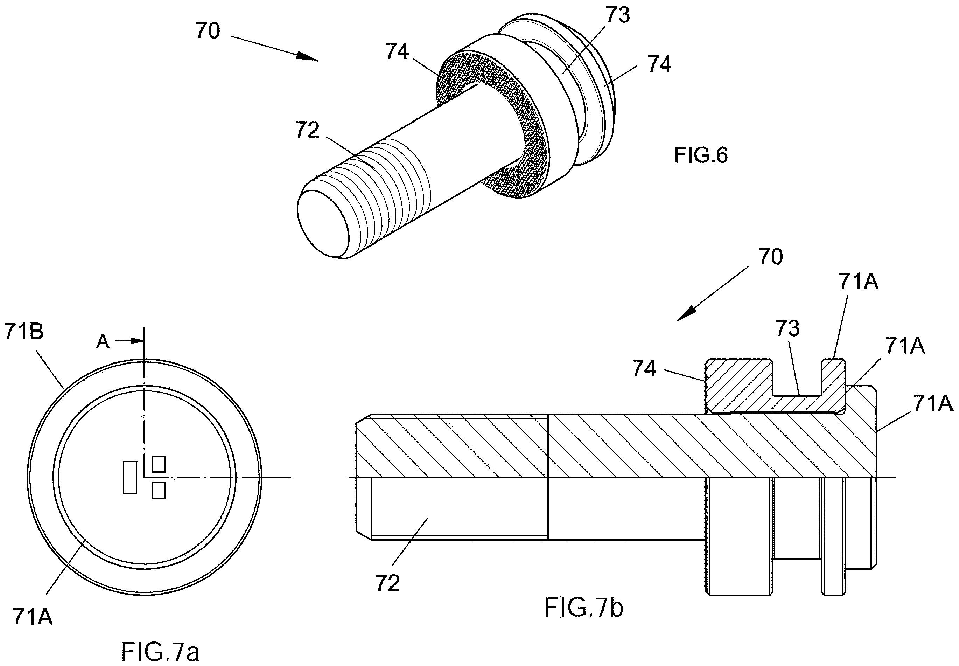

In a further embodiment, shown in a figure 7, the pin 70 is made of two pieces: a first piece corresponds to the stem 72 with which a first head 71 A is associated that has a solidly constrained abutment 71 B against which a second piece is assembled by forcing that has a second head 71 C comprising the seat 73 and the engagement surface 74.

Advantageously, in this embodiment the material of the first piece and the material of the second piece can be different, with physical characteristics that are more closely attuned to the required performance, in particular the hardness of the rippled finish of the engagement surface 74. Reference is made to the embodiment illustrated in figures 10 - 15.

Each shoe 50A, 50B in this case has a first shoe rib 50A' , 50B' and a second shoe rib 50A", 50B" that are opposed and positioned symmetrically on opposite sides of the plate 41.

The first shoe rib 50A', 50B' engages a first rotation guide 205 present in particular on the head 71 of the pin 70 and the second rib 50A", 50B" engages a second rotation guide 206 present in particular on a ring 207 supported by the pin 70.

In particular, the ring 207 is fitted to the stem 72 of the pin 70.

The first rotation guide 205 and the second rotation guide 206 are formed by circular grooves 205', 206' that are coaxial with the axis of the pin 70.

In this case, the conjugate surfaces comprise a first pair of surfaces 201, 202 of reciprocal engagement between the head 71 of the pin 70 and a first side of the hole 200 and a second pair of surfaces 203, 204 of reciprocal engagement between the ring 207 and a second side of the hole 200 opposite the first side of the hole 200.

At least one of the surfaces of the first pair 201, 202 and at least one of the surfaces of the second couple 203, 204 has a rippled finish.

This solution offers the advantage that the two shoe ribs 50A', 50B', 50A", 50B" transmit to the brake plate 41 via the pin 70 a system of balanced force, as the brake plate 41 is symmetrically interposed between the two shoe ribs 50A' , 50B', 50A", 50B".

Thus, torsional and bending moments are not created on the brake plate 41 that, if present, could modify the configuration of the brake plate 41 and consequently the orientation of the pin 70 with a negative impact on the braking efficiency of the brake 1.

The brake plate 41 is welded or otherwise fixed below to the axle 10 by the shaped surface 42 thereof.

In this case, the brake 1 comprises a second support brake plate 208 of the activation cam 60. The second brake plate 208 is welded or otherwise fixed above to the axle 10 in a position that is staggered from the first brake plate 41 with respect to the axis of the axle 10.

The operation of the brake for trailer axles of agricultural type according to the invention is clear from what is disclosed and illustrated and, in particular, is as follows.

The brake for trailer axles of agricultural type 1 is substantially assembled by connecting by welding the brake plate 41 and the second brake plate 208 to the axle 10 in the case of the embodiment illustrated in figures 10-15, then by fitting the preassembled brake mass 40.

Owing to the type and tolerances of the welding task, the geometric axis Y3 of the brake mass 40, and thus of the entirety of the shoes 50 A and 50 B pivoted on the pin 70 does not coincide necessarily with the geometric axis Y of the axle 10.

The axle 10 - brake mass 40 assembly is assembled with the wheel hub 20 to which the drum 30 is fixed that is free to rotate around the geometric axis Y of the axle 10.

When the activation cam 60 is controlled, by control means that is not shown in the figure, the activation cam 60 moves away reciprocally the ends 52 A and 52 B of the shoes 50 A and 50 B, and the friction material respectively 51 A and 51 B engages with the surface of the inner wall of the drum 30, slowing rotation thereof and thus activating braking.

In a first step, the pin 70 is coupled with the hole 200, but not locked by the nut 75; an initial braking is performed, and the free shoes 50 A and 50 B of a radial movement of the geometric axis Y1 of the pin 70 with respect to the geometric axis Y2 of the hole 200 within the limits of the difference in diameter DS of the stem 72 and in diameter DB of the hole 200, adhere with the friction material respectively 51 A and 51 B to the surface of the inner wall of the drum 30 and self-centre dragging the braking activation axis Y3 - within the above limits - to coincide with the longitudinal axis Y of the brake drum, of the wheel hub and of the axle.

In this movement, the shoes 50 A and 50 B drag the head 71 of the pin 70 to which they are pivoted in the seat 73, and then the stem 72 in the hole 200, in a new thus defined position of the axis Y1 with respect to the axis Y2.

This new position ensures centring of the shoes 50 A and 50 B with respect to the inner wall of the drum 30, thus ensuring braking that is effective, balanced and reliable over time.

In this new position the pin 70, with the axis Y1 is rigidly and solidly locked with respect to the hole 200 with an axis Y2 by the engagement of the nut 75.

Tightening the nut 75 -locked by the washer 75 A- on the end of the stem 72 thus results in the engagement between the pair of surfaces 74, 44 in the embodiment illustrated in figures 1 - 9, between the first pair of surfaces 201, 202 and between the second pair of surfaces 203, 204 in the embodiment illustrated in figures 10 - 15.

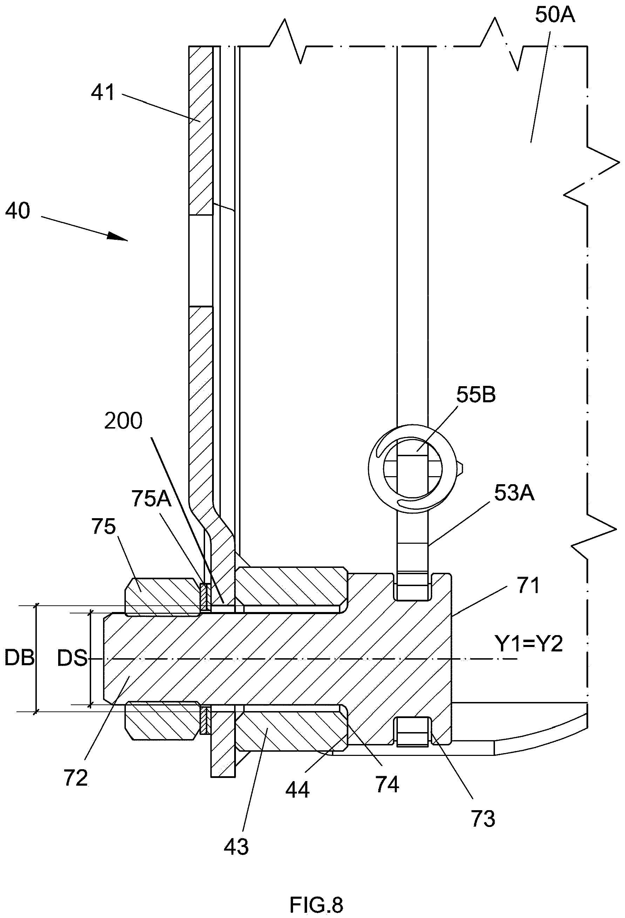

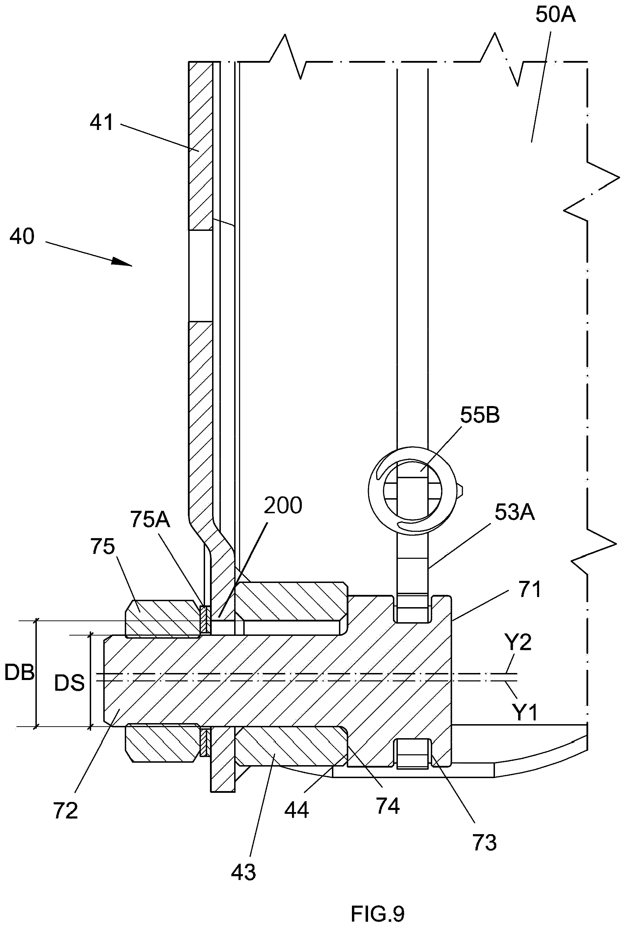

With reference to the first embodiment of the invention, in figures 8 and 9 the reciprocal positions are shown schematically of the components of the brake mass 40, and in particular of the axes Y1 and Y2, before and after self-centring of the shoes 50 A and 50 B against the inner surface of the drum 30: in figure 9 the example is illustrated of a maximum axial movement of the axis Y1 of the pin 70 with respect to the axis Y2 of the hole 200, at the limit of the difference of the diameters DB of the hole 200 and DS of the stem 72.

In the condition illustrated in figure 9, the engagement of the nut 75 and the reciprocal engagement of the engagement surface 74 of the pin 70 with the engagement surface 44 of the bush 43 are activated.

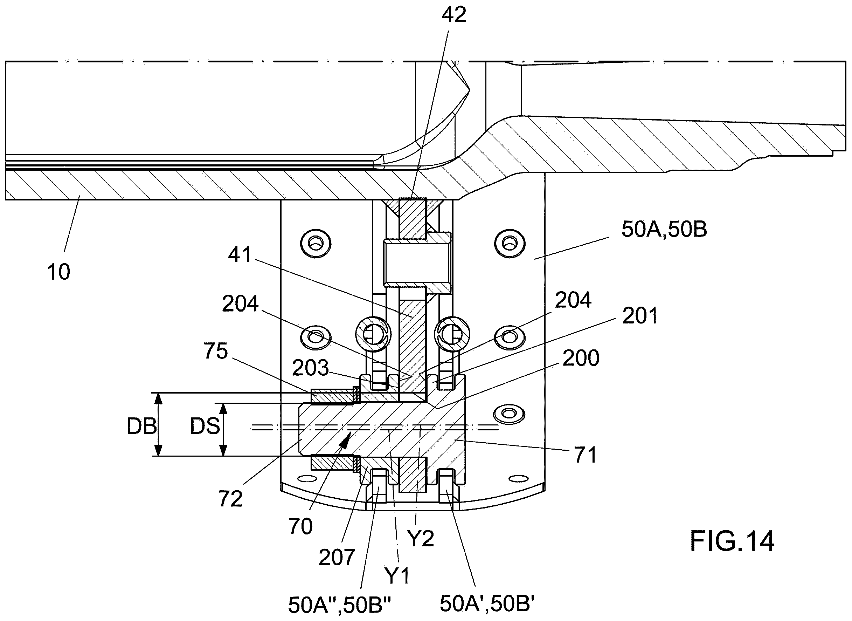

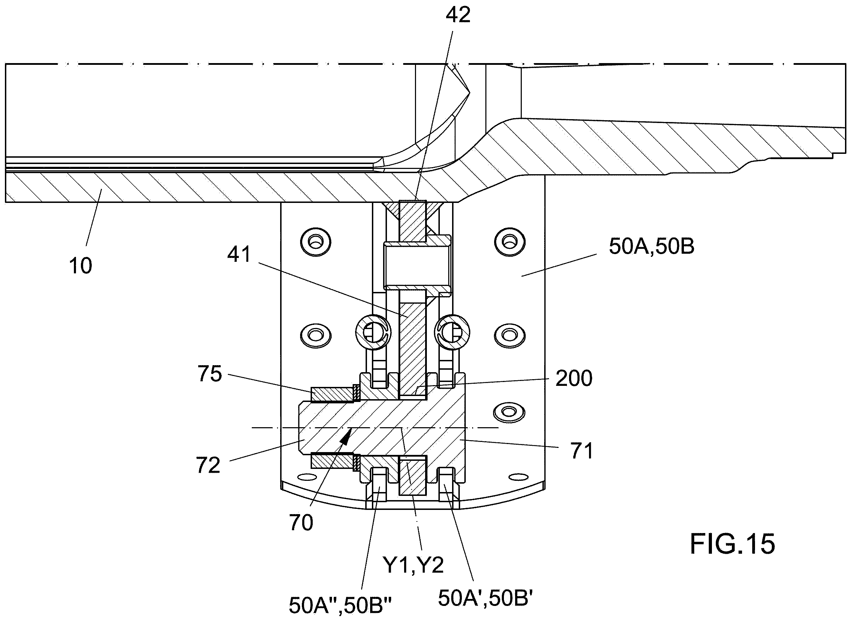

With reference to the second embodiment of the invention, in figures 14 and 15 the reciprocal positions are shown schematically of the components of the brake mass 40, and in particular of the axes Y1 and Y2, before and after self-centring of the shoes 50 A and 50 B against the inner surface of the drum 30: in figure 14 the example is illustrated of a maximum axial movement of the axis Y1 of the pin 70 with respect to the axis Y2 of the hole 200, at the limit of the difference of the diameters DB of the hole 200 and DS of the stem 72.

In the condition illustrated in figure 15 the engagement of the nut 75 and the reciprocal engagement between the first pair of surfaces 201, 202 and between the second pair of surfaces 203, 204 are activated.

It clearly emerges that the safe operation, efficiency and reliability over time of the brake 1 depend, amongst other things, but significantly, on the maintenance over time and use of the pin 70 in this defined new position.

Advantageously, under the engagement pull of the nut 75, the cusps of the rippled finishes provided between the pair of surfaces 74, 44 in the embodiment illustrated in figures 1 - 9, between the first pair of surfaces 201, 202 and between the second pair of surfaces 203, 204 in the embodiment illustrated in figures 10 - 15, indent the corresponding engagement surface, also fixing radially the reciprocal position of the two engagement surfaces, and thus of the respective axis Y1 of the pin 70 and axis Y2 of the hole 200.

As said, it is possible that both surfaces 44, 74, 201, 202, 203, 204 of reciprocal engagement have a rippled finish: in this case favourably, the cusps and the cavities of the respective rippled finishes couple reciprocally, ensuring reciprocal fixing over time of the reciprocal position of the axes Y1 and Y2.

Advantageously, according to the present invention, in order to maintain the new defined position of the pin 70 with respect to the hole 200, and thus of the axis Y1 with respect to the axis Y2, a torque setting is applied to the nut 75 within the limits of the torque available with normal workshop tools, in which the rippled finish of the respective engagement surface(s) ensures an increase in friction necessary and sufficient for maintaining the reciprocal positions, also over time and in the operating conditions of the brake.

In practice, it has been established that a brake for trailer axles of agricultural type according to the invention is particularly advantageous for ensuring the fixed position over time of the ideal axis of the braking shoes coinciding with the longitudinal axis of the brake drum, of the wheel hub and of the axis, with simple means that is easy to activate and cheap.

A brake for trailer axles of agricultural type as conceived herein is susceptible to many modifications and variants, all falling within the scope of the inventive concept as defined by the claims; further, all the details are replaceable by technically equivalent elements.

In practice, the materials used, as well as the dimensions, can be any according to the needs and the state of the art.

## Claims

1. A brake for trailer axles of agricultural type (1) comprising at least one axle (10), a wheel hub (20), a brake drum (30) and a brake mass (40) rigidly connected to said axle (10) and comprising at least one brake plate (41), at least two shoes (50 A, 50 B) equipped with friction material (51 A, 51 B) and an articulating pin (70) of said two shoes (50 A, 50B) having a head (71) and a stem (72), said stem (72) of said pin (70) being removably housed in an axial direction in a hole (200) provided on said brake plate (41), and a tightening nut (75) for tightening said pin (70) to said hole (200) being provided, **characterised in that** said stem (72) of said pin (70) is housed with radial clearance in said hole (200) and **in that** locking means is provided to lock rigidly and firmly a distance set between an axis (Y1) of said pin (70) and an axis (Y2) of said hole (200), said locking means comprising at least two reciprocally engaged conjugate surfaces (44, 74, 201, 202, 203, 204), at least one of which has a rippled finish.

2. The brake for trailer axles of agricultural type (1) according to claim 1 **characterised in that** said rippled finish is formed by a radial or diamond-shaped rippling.

3. The brake for trailer axles of agricultural type (1) according to any preceding claim **characterised in that** said at least one engaged surface coincides with a surface (74) of a circular crown defined by an outer diameter of said head (71) and by an outer diameter of said stem (72) of said pin (70).

4. The brake for trailer axles of agricultural type (1) according to any preceding claim, **characterised in that** each shoe (50A, 50B) has a first shoe rib (50A' , 50B') and a second shoe rib (50A" , 50B") that are opposed and positioned symmetrically on opposite sides of said brake plate (41) and engaging respective rotation guides (205, 206) supported by said pin (70).

5. The brake for trailer axles of agricultural type (1) according to the preceding claim, **characterised in that** said first and second rotation guide (205, 206) are formed by circular grooves (205', 206') that are coaxial with the axis of the pin (70).

6. The brake for trailer axles of agricultural type (1) according to any one of claims 4 and 5, **characterised in that** said first shoe rib (50A' , 50B') engages a first rotation guide (205) present on said head of said pin and said second rib (50A", 50B") engages a second rotation guide (206) present on a ring (207) supported by said pin (70).

7. The brake for trailer axles of agricultural type (1) according to the preceding claim, **characterised in that** said at least two conjugate surfaces comprise a first pair of surfaces (201, 202) of reciprocal engagement between said head (71) of said pin (70) and a first side of said hole (200) and a second pair of surfaces (203, 204) of reciprocal engagement between said ring (207) and a second side of said hole (200) opposite said first side, at least one of the surfaces (201, 202) of said first pair and at least one of the surfaces (203, 204) of said second pair having a rippled finish.

8. The brake for trailer axles of agricultural type (1) according to any one of claims 1 and 2, **characterised in that** it comprises a bush (43) fixed to said plate, wherein said bush (43) surrounds said hole (200) and has an axial cavity having cylindrical generatrices arranged on the prolongation of the cylindrical generatrices of said hole (200), wherein said at least two conjugate surfaces comprise a surface (74) of said head (71) of said pin (70) engaged with a conjugate surface (44) of said bush (43), at least one of said engagement surface (74) of said pin (7) and said conjugate surface (44) of said bush (43) having said rippled finish.

9. A method for making a brake for trailer axles of agricultural type (1) according to any preceding claim, comprising the steps of:
- coupling the pin (70) with the hole (200) without locking the pin (70) with the nut (75);
- activating the brake, so that the shoes (50 A, 50 B) are free to perform a radial movement equal to the movement of the axis (Y1) of the pin (70) with respect to the axis (Y2) of the bush (200);
- put the shoes (50 A, 50 B) with the friction material in contact respectively (51 A, 51 B) to a surface of an inner wall of the drum (30);
- self-centring the braking shoes (50 A, 50 B), making a braking activation axis (Y3) coincide with a longitudinal axis (Y) of the brake drum, of the wheel hub and of the axle, in this movement the shoes (50 A, 50 B) dragging said pin (70) to a new thus defined position of the axis (Y1) of the pin (70) with respect to the axis (Y2) of the hole (200);
- locking rigidly and firmly in the new position the pin (70) with respect to the hole (200) via the engagement of the nut (75), reciprocally engaging the conjugate surfaces (44, 74, 201, 202, 203, 204).

## Patentansprüche

1. Bremse für Achsen von Anhängern landwirtschaftlicher Art (1), umfassend mindestens eine Achse (10), eine Radnabe (20), eine Bremstrommel (30) und ein Bremsgewicht (40), das steif mit der Achse (10) verbunden ist, und umfassend mindestens eine Bremsplatte (41), mindestens zwei Bremsbacken (50A, 50B), die mit Reibbelag (51A, 51B) versehen sind, und einen Gelenkzapfen (70) der beiden Bremsbacken (50A, 50B), aufweisend einen Kopf (71) und einen Schaft (72), wobei der Schaft (72) des Zapfens (70) entfernbar in einer axialen Richtung in einem Loch (200) untergebracht ist, das auf der Bremsplatte (41) ausgebildet ist, wobei eine Spannmutter (75) zum Festziehen des Zapfens (70) am Loch (200) bereitgestellt ist, **dadurch gekennzeichnet, dass** der Schaft (72) des Zapfens (70) mit radialem Abstand im Loch (200) untergebracht ist, und dadurch, dass Festspannmittel bereitgestellt sind, um eine eingestellte Entfernung zwischen einer Achse (Y1) des Zapfens (70) und einer Achse (Y2) des Lochs (200) steif und fest festzuspannen, wobei die Festspannmittel mindestens zwei gepaarte Oberflächen (44, 74, 201, 202, 203, 204), die gegenseitig im Eingriff sind, umfasst, von denen mindestens eine eine geriffelte Oberflächenausführung aufweist.

2. Bremse für Achsen von Anhängern landwirtschaftlicher Art (1) nach Anspruch 1, **dadurch gekennzeichnet, dass** die geriffelte Oberflächenausführung durch eine radiale oder diamantförmige Riffelung ausgeformt ist.

3. Bremse für Achsen von Anhängern landwirtschaftlicher Art (1) nach einem der vorhergehenden Ansprüche, **dadurch gekennzeichnet, dass** die mindestens eine im Eingriff befindliche Oberfläche mit einer Oberfläche (74) eines kreisförmigen Kranzes übereinstimmt, definiert durch einen Außendurchmesser des Kopfs (71) und durch einen Innendurchmesser des Schafts (72) des Zapfens (70).

4. Bremse für Achsen von Anhängern landwirtschaftlicher Art (1) nach einem der vorhergehenden Ansprüche, **dadurch gekennzeichnet, dass** eine jede Bremsbacke (50A, 50B) eine erste Backenrippe (50A', 50B') und eine zweite Backenrippe (50A", 50B") aufweist, die gegenständig angeordnet und symmetrisch auf entgegengesetzten Seiten der Bremsplatte (41) positioniert sind und in jeweilige Rotationsführungen (205, 206) eingreifen, getragen vom Zapfen (70).

5. Bremse für Achsen von Anhängern landwirtschaftlicher Art (1) nach dem vorhergehenden Anspruch, **dadurch gekennzeichnet, dass** die erste und die zweite Rotationsführung (205, 206) durch kreisförmige Rillen (205', 206') ausgeformt sind, die koaxial zur Achse des Zapfens (70) angeordnet sind.

6. Bremse für Achsen von Anhängern landwirtschaftlicher Art (1) nach einem der Ansprüche 4 und 5, **dadurch gekennzeichnet, dass** die erste Backenrippe (50A', 50B') in eine erste Rotationsführung (205) eingreift, die auf dem Kopf des Zapfens bereitgestellt ist, und die zweite Rippe (50A", 50B") in eine zweite Rotationsführung (206) eingreift, die auf einem Ring (207) bereitgestellt ist, der vom Zapfen (70) getragen wird.

7. Bremse für Achsen von Anhängern landwirtschaftlicher Art (1) nach dem vorhergehenden Anspruch, **dadurch gekennzeichnet, dass** die mindestens zwei gepaarte Oberflächen ein erstes Paar von Oberflächen (201, 202) im gegenseitigen Eingriff zwischen dem Kopf (71) des Zapfens (70) und einer ersten Seite des Lochs (200) und ein zweites Paar von Oberflächen (203, 204) im gegenseitigen Eingriff zwischen dem Ring (207) und einer zweiten Seite des Lochs (200), die gegenständig zur ersten Seite angeordnet ist, umfassen, wobei mindestens eine der Oberflächen (201, 202) des ersten Paars und mindestens eine der Oberflächen (203, 204) des zweiten Paars eine geriffelte Oberflächenausführung aufweisen.

8. Bremse für Achsen von Anhängern landwirtschaftlicher Art (1) nach einem der Ansprüche 1 und 2, **dadurch gekennzeichnet, dass** sie eine Buchse (43) umfasst, die an der Platte fixiert ist, wobei die Buchse (43) das Loch (200) umgibt und einen axialen Hohlraum aufweist, aufweisend zylindrische Erzeugende, die auf der Verlängerung der zylindrischen Erzeugenden des Lochs (200) angeordnet sind, wobei die mindestens zwei gepaarten Oberflächen eine Oberfläche (74) des Kopfs (71) des Zapfens (70) im Eingriff mit einer gepaarten Oberfläche (44) der Buchse (43) umfassen, wobei mindestens entweder die Eingriffsoberfläche (74) des Zapfens (7) und/oder die gepaarte Oberfläche (44) der Buchse (43) eine geriffelte Oberflächenausführung aufweisen.

9. Verfahren zur Herstellung einer Bremse für Achsen von Anhängern landwirtschaftlicher Art (1) nach einem der vorhergehenden Ansprüche, umfassend die folgenden Schritte:
- Kuppeln des Zapfens (70) mit dem Loch (200), ohne den Zapfen (70) mit der Mutter (75) festzuspannen;
- Aktivieren der Bremse, sodass die Bremsbacken (50A, 50B) ungehindert eine radiale Bewegung ausführen können, die der Bewegung der Achse (Y1) des Zapfens (70) in Bezug auf die Achse (Y2) der Buchse (200) gleicht;
- Herstellen des Kontakts der Bremsbacken (50A, 50B) mit dem Bremsbelag (51A, 51B) jeweils mit einer Oberfläche einer Innenwand der Trommel (30);
- Selbstzentrieren der Bremsbacken (50A, 50B), indem dafür gesorgt wird, dass eine Bremsaktivierungsachse (Y3) mit einer Längsachse (Y) der Bremstrommel, der Radnabe und der Achse übereinstimmt, wobei die Bremsbacken (50A, 50B) den Zapfen (70) bei dieser Bewegung zu einer neuen, so definierten Position der Achse (Y1) des Zapfens (70) in Bezug auf die Achse (Y2) des Lochs (200) ziehen;
- steifes und festes Festspannen des Zapfens (70) an der neuen Position in Bezug auf das Loch (200) mittels des Eingriffs der Mutter (75), gegenseitig eingreifend in die gepaarten Oberflächen (44, 74, 201, 202, 203, 204) .

## Revendications

1. Frein pour essieux de remorque de type agricole (1), comprenant au moins un essieu (10), un moyeu de roue (20), un tambour de frein (30) et une masse de frein (40) rigidement reliée audit essieu (10) et comprenant au moins une plaque de frein (41), au moins deux segments (50 A, 50 B) équipés d'un matériau de friction (51 A, 51 B) et une broche d'articulation (70) desdits deux segments (50 A, 50 B) comportant une tête (71) et une tige (72), ladite tige (72) de ladite broche (70) étant logée de manière amovible dans une direction axiale dans un orifice (200) prévu sur ladite plaque de frein (41), et un écrou de serrage (75) étant prévu pour serrer ladite broche (70) audit orifice (200), **caractérisé en ce que** ladite tige (72) de ladite broche (70) est logée avec un jeu radial dans ledit orifice (200) et **en ce que** des moyens de verrouillage sont prévus pour verrouiller rigidement et fermement une distance fixée entre un axe (Y1) de ladite broche (70) et un axe (Y2) dudit orifice (200), lesdits moyens de verrouillage comprenant au moins deux surfaces conjuguées mises en prise réciproquement (44, 74, 201, 202, 203, 204), dont l'une au moins présente une finition ondulée.

2. Frein pour essieux de remorque de type agricole (1) selon la revendication 1, **caractérisé en ce que** ladite finition ondulée est formée par une ondulation radiale ou en forme de losange.

3. Frein pour essieux de remorque de type agricole (1) selon l'une quelconque des revendications précédentes, **caractérisé en ce que** ladite au moins une surface mise en prise coïncide avec une surface (74) d'une couronne circulaire définie par un diamètre extérieur de ladite tête (71) et par un diamètre extérieur de ladite tige (72) de ladite broche (70).

4. Frein pour essieux de remorque de type agricole (1) selon l'une quelconque des revendications précédentes, **caractérisé en ce que** chaque segment (50A, 50B) comporte une première nervure (50A', 50B') de segment et une deuxième nervure (50A", 50B") de segment étant opposées et positionnées symétriquement sur les côtés opposés de ladite plaque de frein (41) et se mettant en prise dans des guides de rotation (205, 206) respectifs supportés par ladite broche (70) .

5. Frein pour essieux de remorque de type agricole (1) selon la revendication précédente, **caractérisé en ce que** lesdits premier et deuxième guide de rotation (205, 206) sont formés par des rainures circulaires (205', 206') qui sont coaxiales avec l'axe de la broche (70).

6. Frein pour essieu de remorque de type agricole (1) selon l'une quelconque des revendications 4 et 5, **caractérisé en ce que** ladite première nervure (50A', 50B') de segment se met en prise avec un premier guide de rotation (205) présent sur ladite tête de ladite broche et ladite deuxième nervure (50A", 50B") se met en prise avec un deuxième guide de rotation (206) présent sur un anneau (207) supporté par ladite broche (70) .

7. Frein pour essieux de remorque de type agricole (1) selon la revendication précédente, **caractérisé en ce que** lesdites au moins deux surfaces conjuguées comprennent une première paire de surfaces (201, 202) d'engagement réciproque entre ladite tête (71) de ladite broche (70) et un premier côté dudit orifice (200) et une deuxième paire de surfaces (203, 204) d'engagement réciproque entre ledit anneau (207) et un deuxième côté dudit orifice (200) opposé audit premier côté, au moins l'une des surfaces (201, 202) de ladite première paire et au moins l'une des surfaces (203, 204) de ladite deuxième paire ayant une finition ondulée.

8. Frein pour essieux de remorque de type agricole (1) selon l'une quelconque des revendications 1 et 2, **caractérisé en ce qu'**il comprend une douille (43) fixée à ladite plaque, dans lequel ladite douille (43) entoure ledit orifice (200) et comporte une cavité axiale comportant des génératrices cylindriques disposées sur le prolongement des génératrices cylindriques dudit orifice (200), dans lequel lesdites au moins deux surfaces conjuguées comprennent une surface (74) de ladite tête (71) de ladite broche (70) mise en prise avec une surface conjuguée (44) de ladite broche (43), au moins une surface parmi ladite surface d'engagement (74) de ladite broche (7) et ladite surface conjuguée (44) de ladite douille (43) ayant ladite finition ondulée.

9. Procédé de fabrication d'un frein pour essieux de remorque de type agricole (1) selon l'une quelconque des revendications précédentes, comprenant les étapes de :
- accoupler la broche (70) à l'orifice (200) sans verrouiller la broche (70) à l'écrou (75) ;
- activer le frein, de sorte que les segments (50 A, 50 B) soient libres d'effectuer un mouvement radial égal au mouvement de l'axe (Y1) de la broche (70) par rapport à l'axe (Y2) de la douille (200) ;
- mettre les segments (50 A, 50 B) avec le matériau de friction en contact respectivement (51 A, 51 B) avec une surface d'une paroi intérieure du tambour (30) ;
- autocentrer les segments de frein (50 A, 50 B), en faisant coïncider un axe d'activation (Y3) du freinage avec un axe longitudinal (Y) du tambour de frein, du moyeu de roue et de l'essieu, dans ce mouvement les segments (50 A, 50 B) entraînant ladite broche (70) dans une nouvelle position ainsi définie de l'axe (Y1) de la broche (70) par rapport à l'axe (Y2) de l'orifice (200) ;
- verrouiller rigidement et fermement dans la nouvelle position la broche (70) par rapport à l'orifice (200) via l'engagement de l'écrou (75), en mettant en prise réciproquement les surfaces conjuguées (44, 74, 201, 202, 203, 204).
